# EUROPEAN PATENT APPLICATION

(11) **EP 3 082 321 A1**
(43) Date of publication of application: **19.10.2016**
(21) Application number: 13898954.6
(22) Date of filing: 13.12.2013
(51) Int. Cl.: H04L 29/14

(54) **RECEPTION DEVICE, TRANSMISSION DEVICE, OPTICAL TRANSMISSION DEVICE, OPTICAL TRANSMISSION SYSTEM, AND MONITORING METHOD**

(71) Applicant: Mitsubishi Electric Corporation, Chiyoda-ku Tokyo 100-8310 (JP)
(72) Inventor: TAKEMOTO, Yuta, Tokyo 100-8310 (JP); KONISHI, Yoshiaki, Tokyo 100-8310 (JP)
(74) Representative: Lavoix
(86) International application number: PCT/JP2013/083490
(87) International publication number: WO 2015/087446

(57) **Abstract**

A reception device (20) has a receiving unit (21), an extracting unit (222) and an outputting part (223). The receiving unit (21) receives a lane signal transmitted through each of a plurality of lanes (L1, L2) from a transmission device (30) that partitions an OTU frame into a plurality of the lane signal. For each of the plurality of lanes (L1, L2), the extracting unit (222) extracts, from the lane signal received by the receiving unit (21), data included in an overhead of an OTU frame. The outputting part (223) outputs, as information indicating communication conditions of the lanes (L1, L2) transmitting the lane signal from which the data is extracted by the extracting unit (222), information relating to the data extracted by the extracting unit (222).

## Description

### Technical Field

The present disclosure relates to a reception device, a transmission device, an optical transmission device, an optical transmission system and a monitoring method.

### Background Art

Optical transmission systems for transmission of large volumes of data in a short time are put into practical use in recent years. In this type of optical transmission system, in addition to modulation using optical intensity alone, the signal is modulated using properties such as phase information. Thus signal processing devices are required such as complex optical modulation-demodulation circuits and electrical circuits operating at high speed. However, such signal processing devices are expensive in optical transmission systems for signal transmission at speeds in excess of 100 Gbit/s, and implementation itself of such a signal processing device is difficult.

Thus in a core network requiring high speed communication, often data is partitioned into multiple lanes, and subcarriers, polarized waves, and the like for transmission of the partitioned data are multiplexed. When data is partitioned into multiple lanes, the speed of operation of the signal processing device processing the partitioned data can be restricted (for example, see Non-Patent Literature 1).

For example, in an optical transponder for transmitting a signal at 100 Gbit/s, data in an optical channel transport unit (OTU) format determined according to Non-Patent Literature 1 is allocated among multiple lanes and is transmitted. Moreover, this optical transponder receives a signal through multiple channels, that is, lanes, and reproduces the original signal by executing alignment and deskewing between channels. A function for transmission of data of multiple lanes is implemented in the optical transponder by such processing, and the optical transponder can realize high speed data transmission.

### Citation List

### Patent Literature

Non-Patent Literature 1: ITU-T Recommendation G.709

### Summary of Invention

### Technical Problem

In addition to a payload, data formatted for an OTU includes monitoring-control data for monitoring the condition of the communication path and for control of communication based on the results of such monitoring. When data formatted for the OTU is partitioned into multiple lanes, the monitoring-control data also becomes partitioned. As a result, even if a communication obstacle occurs in only one of the multiple lanes, the monitoring-control data transmitted through the multiple lanes becomes incomplete, and monitoring and the like of the condition of the communication path becomes difficult. However, an ability to monitor and the like the condition of the communication path even when this type of difficulty occurs is desired. Thus there is potential for improvement of resistance to obstacles in optical communication performed through multiple lanes.

In consideration of the aforementioned circumstances, an object of the present disclosure is to improve resistance to obstacles of optical communication performed through multiple lanes.

### Solution to Problem

In order to achieve the aforementioned object, a reception device of the present disclosure includes: a receiving part to receive a plurality of lane signals transmitted through a plurality of lanes from a transmission device partitioning an OTU frame into the plurality of the lane signals; an extracting part, for each lane of the plurality of lanes, to extract data included in an overhead of the OTU frame from a respective lane signal of the plurality of lane signals received by the receiving part; and an outputting part to output, as information indicating a communication condition of the lane transmitting the lane signal from which the data is extracted by the extracting part, information relating to the data extracted by the extracting part.

### Advantageous Effects of Invention

According to the present disclosure, a reception device outputs information indicating a communication condition of each lane of a plurality of lanes. Thus even when an obstacle to communication occurs in any of the plurality of lanes, monitoring of the communication condition of each lane becomes possible. Therefore resistance to obstacles to optical communication through the plurality of lanes can be improved.

### Brief Description of Drawings

FIG. 1 is a diagram showing configuration of an optical transmission system;
FIG. 2 is a diagram showing configuration of an OTU frame;
FIG. 3 is a diagram for explanation of signals when a communication obstacle occurs in a lane;
FIG. 4 is a diagram for explanation of a multi-frame number included in a lane signal;
FIG. 5 is a diagram showing an optical communication network using an undersea cable; and
FIG. 6 is a diagram showing a media converter system.

### Description of Embodiments

Embodiments of the present disclosure are explained below while referring to figures.

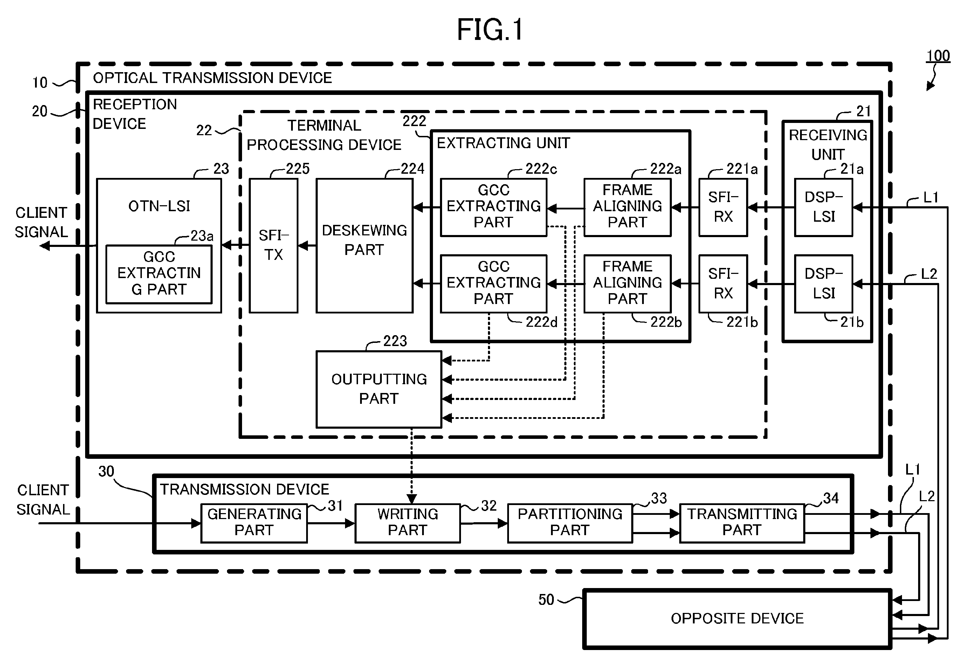

FIG. 1 shows configuration of an optical transmission system 100 according to an embodiment of the present disclosure. The optical transmission system 100 has an optical transmission device 10 and an opposite device 50 that are mutually interconnected through an optical communication line. The optical communication line, for example, is an optical fiber forming a core network. Moreover, the optical communication line of the present embodiment includes lanes L1 and L2, which correspond to respective multiplexed subcarriers. Each of lanes L1 and L2 transmits a lane signal, that is, an optical signal. The lane signal, for example, is an OTL 4.2 (Optical channel Transport Lane 4.2) signal.

The optical transmission device 10 has a reception device 20 for receiving the lane signal from the opposite device 50 and has a transmission device 30 for transmitting the lane signal to the opposite device 50. The optical transmission device 10 has the reception device 20 and the transmission device 30, and thus communicates bi-directionally with the opposite device 50.

The reception device 20 generates a client signal from the lane signal received from the opposite device 50, and transmits to a client. The client signal, for example, is a 100GbE digital signal. Moreover, the client, for example, is an OLT (Optical Line Terminal) operated by a radio station or a telecommunication carrier. The reception device 20 includes a receiving unit 21 for receiving the lane signal, a terminal processing device 22 for executing terminal processing of the OTU frame carried by the lane signals, and an OTN-LSI 23 for generating the client signal from the OTU signal carrying the OTU frame.

The receiving unit 21 receives the respective lane signals transmitted using the lanes L1 and L2. The receiving unit 21 has DSP-LSIs (Digital Signal Processing-Large Scale Integration) 21 a and 21 b for performing digital signal processing of the respective lane signals of the lanes L1 and L2. The receiving unit 21 forwards the received lane signals to the terminal processing device 22.

The terminal processing device 22 reproduces a single OTU signal from the two lane signals obtained by the opposite device 50 partitioning the single OTU signal. That is to say, the terminal processing device 22 reproduces the OTU frame from the two lane signals carried by subcarriers.

The terminal processing device 22 has: SFI-RXs (SerDes Framer Interface Receivers) 221 a and 221 b for receiving lane signals formatted for optical communication, an extracting unit 222 for extracting data from the lane signals, an outputting part 223 for outputting information indicating communication conditions of the lanes L1 and L2, a deskewing part 224 for eliminating skew, and an SFI-TX (transmitter) 225 for sending the OTU signal formatted for optical communication.

The extracting unit 222, through the SFI-RXs 221 a and 221 b, receives the lane signals received by the receiving unit 21 from each of the lanes L1 and L2. Moreover, from each of the received lane signals, the extracting unit 222 extracts data included in the GCC (General Communication Channel) region of the overhead of the OTU frame.

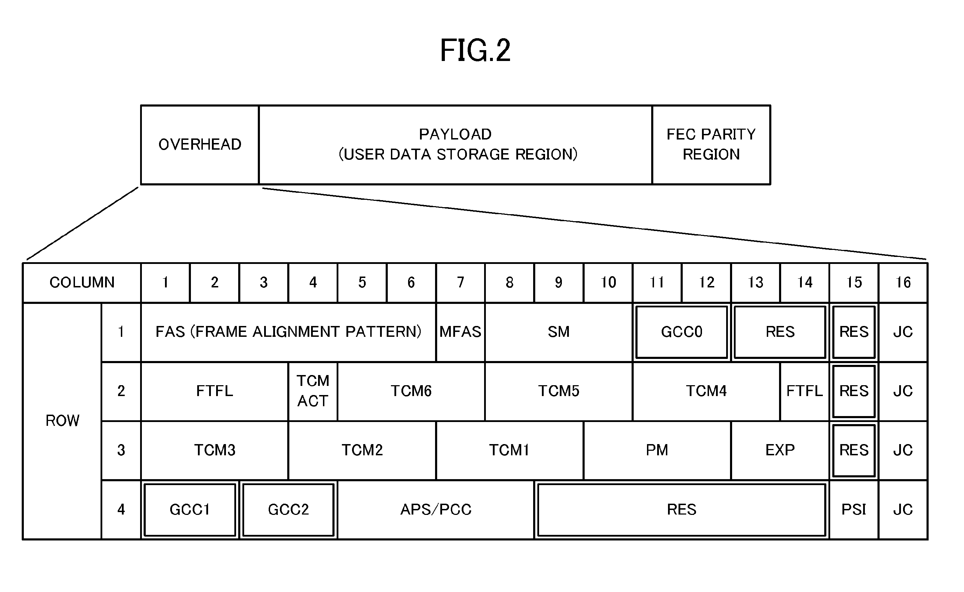

Configuration of the OTU frame is indicated in FIG. 2. As indicated in FIG. 2, the OTU frame includes an overhead, a payload, and a forward error correction (FEC) parity region, the overhead being appended to the payload, the payload being a region for storing user data, and the FEC parity region being for correction of bit errors that occur during transmission.

Moreover, GCC regions and RES (Reserve) regions, as indicated by the double-framed regions in FIG. 2, are included in the overhead and can be freely used by a user. Specifically, GCC regions in FIG. 2 are indicated as "GCC0", "GCC1" and "GCC2". Five RES regions are indicated as "RES" in FIG. 2. The GCC regions and RES regions are normally used in a management plane for transmission of information such as OAM (Operation Administration and Maintenance) information. Furthermore, although data of the GCC regions is extracted in the present embodiment, rather than the GCC regions, data can be extracted from the RES regions.

As indicated in the previously discussed FIG. 1, the extracting unit 222 has frame aligning parts 222a and 222b for alignment of the OTU frame, and has GCC extracting parts 222c and 222d for extraction of data of the GCC regions form the lane signals.

The frame aligning parts 222a and 222b use the frame alignment pattern (FAS, Frame Alignment Signal) included in the lane signal, and align the lane signals transmitted through the lanes L1 and L2, respectively. More specifically, based on the multi-frame number (MFAS, Multi-Frame Alignment Signal), each of the frame aligning parts 222a and 222b identifies the overhead of the OTU frame. Thereafter, each of the frame aligning parts 222a and 222b aligns the OTU frame by separate alignments of the lane signals. The frame aligning parts 222a and 222b send sequentially to the outputting part 223 the multi-frame number of the identified overhead, and send the aligned lane signals to the GCC extracting parts 222c and 222d, respectively.

The GCC extracting parts 222c and 222d are implemented, for example, as functions of an LSI. The GCC extracting part 222c sequentially extracts data of the GCC regions from the lane signal transmitted through the lane L1 and outputs the extracted data to the outputting part 223. The GCC extracting part 222d sequentially extracts data of the GCC regions from the lane signal transmitted through the lane L2 and outputs the extracted data to the outputting part 223. Moreover, the GCC extracting parts 222c and 222d transmit the lane signals to the deskewing part 224.

The outputting part 223 is implemented, for example, as a function of an LSI. The outputting part 223 acquires the multi-frame numbers sent from each of the frame aligning parts 222a and 222b and the data sent from each of the of the GCC extracting parts 222c and 222d, and performs aggregating for each of the lanes. For example, the outputting part 223 performs aggregation to form a single datum extracted most frequently by the GCC extracting part 222c by aggregating data outputted sequentially from the GCC extracting part 222c. Thereafter, the outputting part 223 outputs to the writing part 32 of the transmission device 30 this single datum as information indicating that the communication condition of the lane L1 is normal.

When at least a fixed fraction of the multi-frame numbers sent from the frame aligning part 222a is missing, or when frequency of output of data from the GCC extracting part 222c is less than or equal to a fixed value, the outputting part 223 can output to the writing part 32 information indicating that the communication condition of the lane L1 is abnormal.

Also, for the data outputted from the frame aligning part 222b and the GCC extracting part 222d, the outputting part 223 outputs to the writing part 32 information indicating the communication condition of the lane L2.

A normal communication condition for the respective lane L1 or L2 means that the baud rate is greater than or equal to a fixed rate and the bit error rate is less than or equal to a fixed value. Moreover, abnormal communication conditions for the respective lane L1 or L2, in addition to a conditions in which communication is disrupted, include conditions in which the baud rate is extremely low, and conditions in which the bit error rate is extremely high. For example, when degradation only occurs in the semiconductor laser used for generating the optical signal of the lane L2, or when wavelength error of the optical signal for only the same semiconductor laser becomes large due to unsuitable control of the temperature, then an abnormal communication condition is considered to occur only for lane L2.

The deskewing part 224 reproduces a single OTU signal from the two lane signals and then sends the reproduced signal to the OTN-LSI 23 through the SFI-TX 225.

The OTN-LSI 23 has a GCC extracting part 23a. The GCC extracting part 23a, in the same manner as the GCC extracting parts 222c and 222d, extracts data included in the GCC region of the overhead of the OTU frame. However, the GCC extracting part 23a extracts data from the reproduced OTU signal rather than from the lane signal.

The transmission device 30 generates two lane signals from the client signal and sends the generated lane signals through the lanes L1 and L2 to the opposite device 50. The transmission device 30 has a generating part 31 for generating the OTU frame from the client signal, a writing part 32 for writing data to the overhead of the OTU frame, a partitioning part 33 for partitioning the OTU frame into the two lane signals, and a transmitting part 34 for transmitting the lane signals to the opposite device 50.

Based on information outputted from the outputting part 223, the writing part 32 writes data for determination of the communication conditions of the lanes L1 and L2 to the GCC region of the overhead of the OTU frame generated by the generating part 31. Furthermore, the writing part 32 according to the present embodiment in principle writes data fixing all bit values at zero.

The partitioning part 33 partitions the OTU frame, to which data is written by the writing part 32, into a plurality of lane signals. The partitioning part 33, for example, performs partitioning by round robin for each block of 16 bytes forming the OTU frame, as specified in ITU-T Recommendation G.709. However, in order to partition the OTU frame into the two lane signals, the partitioning part 33 according to the present embodiment allocates the OTU frame-forming 16 byte blocks alternatingly between the lane L1 and the lane L2. The odd multi-frame numbers are allocated to one of the lane L1 and L2, and the even multi-frame numbers are allocated to the other lane.

The transmitting part 34 sends each of the lane signals partitioned by the partitioning part 33 to the opposite device 50 through the respective lane L1 or L2.

The opposite device 50 is a communication device that has a configuration similar to that of the optical transmission device 10. That is to say, the opposite device 50 has a receiver configured in a manner similar to that of the reception device 20 and has a transmitter configured in a manner similar to that of the transmission device 30.

The receiver of the opposite device 50 receives the lane signals transmitted from the transmission device 30 through the lanes L1 and L2. Moreover, the receiver of the opposite device 50 extracts from the lane signals the data written by the writing part 32. In the present embodiment, due to the writing of fixed data by the writing part 32, the receiver of the opposite device 50 extracts the same data for any of lanes L1 and L2. However, the writing part 32 can also write data such that the data extracted by the receiver of the opposite device 50 is individualized for each of the lanes L1 and L2.

The transmitter of the opposite device 50 transmits the lane signals to the reception device 20 through the lanes L1 and L2. Moreover, the data written to the overhead of the OTU frame by the transmitter of the opposite device 50 becomes extracted by the extracting unit 222.

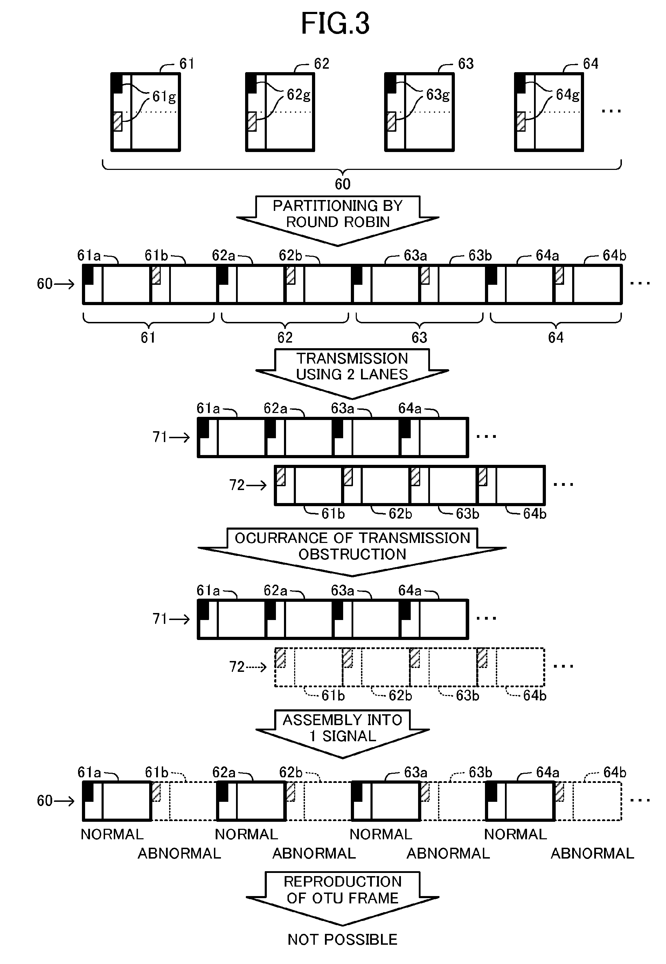

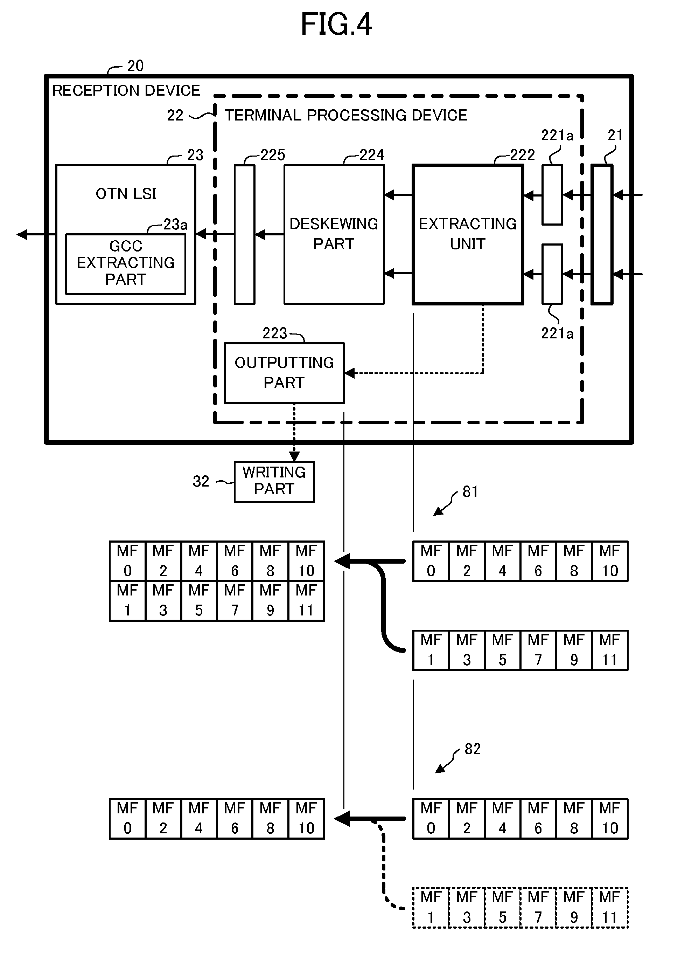

Next, FIGS. 3 and 4 are used to explain an example of operation of an optical transmission system 100 when there is a change, from a normal communication condition for both of the lanes L1 and L2, to an abnormal communication condition for only the lane L2.

FIG. 3, indicating an OTU signal 60 and lane signals 71 and 72, is a schematic example of a case in which a communication obstacle occurs in the lane L2.

As indicated in FIG. 3, the OTU signal 60 carries OTU frames 61, 62, 63, 64 and the like. The OTU frames 61, 62, 63 and 64 include respective GCC regions 61 g, 62g, 63g and 64g. Furthermore, the OTU signal 60, for example, is an OTU4 signal having a baud rate of approximately 100 Gbit/s.

When the OTU frames 61 to 64 are partitioned by round robin, the OTU frame 61 is divided into the data 61 a and 61 b, the OTU frame 62 is divided into the data 62a and 62b, the OTU frame 63 is divided into the data 63a and 63b, and the OTU frame 64 is divided into the data 64a and 64b.

Thereafter when the OTU signal 60 is sent through the two lanes L1 and L2, the lane signal 71, which includes data such as data 61 a, 62a, 63a and 64a, is transmitted through the lane L1; and the lane signal 72, which includes data such as data 61 b, 62b, 63b and 64b, is transmitted through the lane L2. By this configuration, each of the lane signals 71 and 72 is transmitted under conditions in which the symbol rate is more controlled than for the OTU signal 60.

Then when a transmission fault occurs in lane L2, the lane signal 72 is lost. In a state in which the lane signal 72 is disrupted, the reception device 20 receives only the lane signal 71. Then when the reception device 20 attempts to combine the lane signals 71 and 72 into a single OTU signal 60, although the data 61 a, 62a, 63a and 64a are reproduced normally, the data 61 b, 62b, 63b and 64b are not reproduced normally, that is, are abnormal.

Thus even though the reception device 20 attempts reproduction of the OTU signal 60, due to loss of the lane signal 72, alignment of the OTU frames 61 to 64 is not possible. Thus the reception device 20 is unable to reproduce the OTU frames 61-64. That is to say, even though no fault occurs in the lane L1, the OTU signal 60 is disrupted due to loss of the lane signal 72.

FIG. 4 shows the multi-frame numbers included in the lane signals and the multi-frame numbers acquired by the outputting part 223, comparing the case in which the communication condition is normal for both lanes L1 and L2, versus the case in which a communication obstacle occurs in the lane L2. Furthermore, the multi-frame number group 81 indicates the case in which the communication condition is normal for both lanes L1 and L2, and the multi-frame number group 82 indicates the case in which the communication obstacle occurs in the lane L2.

Moreover, the multi-frame numbers in FIG. 4 are indicated by the numbers shown following "MF". That is to say, "MF0" indicates that the multi-frame number is 0, and "MF1" indicates that the multi-frame number is 1. The even multi-frame numbers are included in the lane signal transmitted through the lane L1. Moreover, the odd multi-frame numbers are included in the lane signal transmitted through the lane L2.

As shown in FIG. 4, when the communication condition is normal for both lanes L1 and L2, all the multi-frame numbers, that is, 0, 1, 2 and the like, are present together without omission. Thus the GCC extracting part 23a of the OTN-LSI 23 can extract data from the reproduced OTU frame. Moreover, the outputting part 223 outputs information indicating that the communication condition is normal for both lanes L1 and L2.

On the other hand, when the communication condition of the lane L2 becomes abnormal, the odd multi-frame numbers become missing. In this case, the OTU frame is not reproduced, and thus the GCC extracting part 23a is unable to extract data. However, the outputting part 223 is able to acquire the even multi-frame numbers included in the lane signal that is transmitted through the lane L1. Thus the outputting part 223 outputs information indicating that the communication condition of the lane L1 is normal and information indicating that the communication condition of the lane L2 is abnormal.

When information is outputted by the outputting part 223 indicating that the communication condition of the lane L2 is abnormal, the writing part 32, among the data written to the overhead of the OTU frame, stops the writing of data included in the lane signal sent through the lane L2. Specifically, when the even-numbered (odd-numbered) blocks among every 16 byte block forming the OTU frame are transmitted through the lane L2, the writing part 32, among the data written to the overhead of the OTU frame, stops the writing of data to the even-numbered (odd-numbered) blocks. Useless transmission of data can be prevented by this means.

Moreover, when information is outputted by the outputting part 223 that indicates that the communication condition of the lane L2 is abnormal, the writing part 32 writes data indicating that the communication condition of the lane L2 is abnormal. By this means, the writing part 32 notifies the opposite device 50 through the lane L1 that the communication condition of the lane L2 is abnormal.

Moreover, when the communication condition of the lane L2 becomes abnormal, the opposite device 50 is considered to notify the reception device 20 that the communication condition of the lane L2 is abnormal. In this case, the outputting part 223 determines that the communication condition of the lane L2, for which notification is received from the opposite device 50, is abnormal based on the data extracted by the extracting unit 222. Thereafter, by the output of the specific information, the outputting part 223 stops the writing by the writing part 32 of data that is included in the lane signal transmitted through the lane L2. Thus the useless transmission of data can be prevented.

In the above-explained manner, the outputting part 223 according to the present embodiment outputs information indicating the communication condition of each of the lanes L1 and L2. By this means, even when a communication obstacle occurs in lane L1 or L2, monitoring becomes possible of the respective communication conditions of the lanes L1 and L2. Thus resistance to obstacles to optical communication through the lanes L1 and L2 can be improved.

Moreover, the writing part 32 writes the specific data to the overhead of the OTU frame based on the information outputted from the outputting part 223. Due to the writing part 32 using data included in the lane signal transmitted through one of the lanes L1 and L2, even when a communication obstacle occurs in the other lane of the lanes L1 and L2, communication is possible between the optical transmission device 10 and the opposite device 50 by the use of the control monitoring data. By this means, when at least a single lane conducts signals, a robust in-band control monitoring channel is realized that becomes capable of communication.

In a general optical communication network, data for HDLC (High-level Data Link Control) or data formatted according to a user-specified format is often stored in the GCC region. In order to realize a network for communication at a baud rate in excess of 100 Gbit/s, such as at 150 Gbit/s, 200 Gbit/s and 400 Gbit/s, means are used such as partitioning the signal into multiple lanes in the communication path, and arranging multiple line/client cards constituting the communication device. Thus the GCC regions included in the overhead of the OTU frame are also partitioned and then transmitted. The application of the optical transmission system 100 of the present embodiment to this type of general optical communication network is thought to improve resistance to obstacles and to be advantageous.

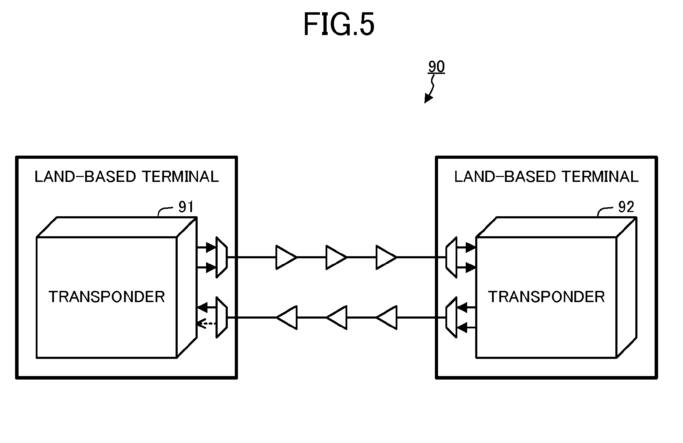

Moreover, FIG. 5 is a schematic diagram indicating an optical communication network 90 that communicates through an undersea cable. In this optical communication network 90, the number of FEC errors included in the data received from the transponder 91 is stored in the GCC region (RES region), and the transponder 92 transmits the data including this GCC region to the transponder 91. That is to say, the GCC region is used for checking the quality of transmission, that is, opposing performance, at the remote location for the channel used for sending the signal of the transponder 91 itself. During on-site adjustment of the transponder 91, optimization is performed based on a Q value determined from the number of FEC errors.

However, when communication in a subcarrier unit of the main signal is lost, the condition of the other subcarriers also becomes unclear, and confirmation itself of quality of the signal transmission channel of the transponder 91 is thought to become difficult. The dashed line arrow in FIG. 5 indicates a disrupted main signal, that is, lane signal.

If the optical transmission system 100 of the present embodiment is used in this optical communication network 90, even if communication in a subcarrier unit of the main signal is lost, self-confirmation of quality of the transmission channel of the transponder 91 becomes possible.

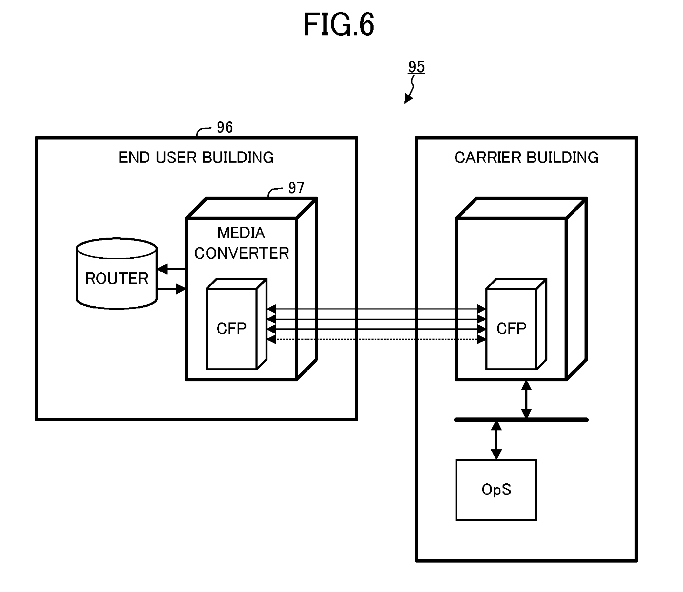

FIG. 6 shows schematically a general media converter system 95. According to this media converter system 95, the carrier device is arranged directly in an end user building 96 as a media converter 97. In this form of service, due to the lack of an out-of-band OAM channel, performance of control and monitoring of the media converter 97 often depends on an in-band channel. According to this type of media converter system 95, even when the main signal data is disrupted, communication for control and monitoring of the media converter 97 preferably can be continued as much as possible. Furthermore, the dashed line double arrow in FIG. 6 indicates a disrupted main signal, that is, lane signal.

If the optical transmission system 100 according to the present embodiment is used for this media converter system 95, even when the main signal data is disrupted, control and monitoring of the media converter 97 can be continued as much as possible.

Although embodiments of the present disclosure are explained above, the present disclosure is not limited to the aforementioned embodiments.

For example, the number of lanes is not limited to 2, and there may be 3 or more lanes. Moreover, although the lanes L1 and L2 in the aforementioned embodiments correspond to sub-carriers, these lanes can correspond to polarized waves or multi-valued phases of an Ich and Qch.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Industrial Applicability

The reception device, transmission device, optical transmission device, optical transmission system and monitoring method of the present disclosure are suitable for highly fault-resistant optical communication.

### Reference Signs List

- 100: Optical transmission system
- 10: Optical transmission device
- 20: Reception device
- 21: Receiving unit
- 21a, 21b: DSP-LSI
- 22: Terminal processing device
- 221a, 221b: SFI-RX
- 222: Extracting unit
- 222a, 222b: Frame aligning part
- 222c, 222d: GCC extracting part
- 223: Outputting part
- 224: Deskewing part
- 225: SFI-TX
- 23: OTN-LSI
- 23a: GCC extracting part
- 30: Transmission device
- 31: Generating part
- 32: Writing part
- 33: Partitioning part
- 34: Transmitting part
- 50: Opposite device
- 60: OTU signal
- 61, 62, 63, 64: OTU frame
- 61 a, 61 b, 62a, 62b, 63a, 63b, 64a, 64b: Data
- 61 g, 62g, 63g, 64g: GCC region
- 71,: 72Lane signal
- 81,: 82Multi-frame number group
- 90: Optical communication network
- 91, 92: Transponder
- 95: Media converter system
- 96: End user building
- 97: Media converter
- L1, L2: Lane

## Claims

1. A reception device, comprising:
a receiving part to receive a plurality of lane signals transmitted through a plurality of lanes from a transmission device partitioning an OTU frame into the plurality of the lane signals;
an extracting part, for each lane of the plurality of lanes, to extract data included in an overhead of the OTU frame from a respective lane signal of the plurality of lane signals received by the receiving part; and
an outputting part to output, as information indicating a communication condition of the lane transmitting the lane signal from which the data is extracted by the extracting part, information relating to the data extracted by the extracting part.

2. The reception device according to claim 1, wherein
the extracting part is further to extract from the lane signal data included in a GCC region or an RES region of an overhead of the OTU frame by identification of the overhead of the OTU frame based on a multi-frame number.

3. The reception device according to claim 1 or claim 2, wherein
the extracting part is further to sequentially extract data for each lane of the plurality of lanes; and
the outputting part is further to output, as information indicating the communication condition of the lane, information obtained by aggregating the data sequentially extracted by the extracting part.

4. A transmission device, comprising:
a writing part to write, to an overhead of an OTU frame, data relating to a communication condition of a lane of a plurality of lanes for transmission of the OTU frame;
a partitioning part to partition into a plurality of lane signals the OTU frame to which the data is written by the writing part; and
a transmitting part to transmit, to a reception device through each lane of the plurality of lanes, a lane signal of the plurality of lane signals partitioned by the partitioning part.

5. An optical transmission device comprising a reception device and a transmission device to bi-directionally communicate with a communication device that, for each lane signal of a plurality of lane signals, partitions an OTU frame into the lane signal, wherein
the reception device comprises:
a receiving part to receive the lane signal transmitted through a respective lane of a plurality of lanes from the communication device;
an extracting part to extract, for each lane of the plurality of lanes, data included in an overhead of the OTU frame from the lane signal received by the receiving part; and
an outputting part to output, as information indicating a communication condition of the lane transmitting the lane signal from which the data is extracted by the extracting part, information relating to the data extracted by the extracting part; and
the transmission device comprises:
a writing part to write, to the overhead of the OTU frame, data relating to the communication condition of the lane for transmission of the OTU frame;
a partitioning part to partition into the plurality of lane signals the OTU frame to which the data is written by the writing part; and
a transmitting part to transmit, to the communication device through the lane of the plurality of lanes, a respective lane signal of the plurality of lane signals partitioned by the partitioning part.

6. The optical transmission device according to claim 5, wherein
the writing part is further to, when information indicating that the communication condition of the lane is abnormal is outputted by the outputting part, among the data written to the overhead of the OTU frame, stop writing data included in the lane signal transmitted through the lane for which communication condition is indicated to be abnormal.

7. An optical transmission system comprising:
the reception device according to any one of claims 1 to 3; and
the transmission device according to claim 4 to connect through an optical communication line to the reception device.

8. The optical transmission system according to claim 7, wherein
the writing part is further to write data to the overhead of the OTU frame so that the data extracted by the extracting part from each lane of the plurality of lanes is identical.

9. The optical transmission system according to claim 7, wherein
the writing part is further to write data to the overhead of the OTU frame so that the data extracted by the extracting part is specific to the lane.

10. The optical transmission system according to any one of claims 7 to 9, wherein
the reception device further comprises a notifying part, when information indicating the communication condition of the lane is abnormal is outputted by the outputting part, to send to the transmission device notification of the lane for which the communication condition is indicated to be abnormal; and
the writing part is further to stop writing, among the data written to the overhead of the OTU frame, the data included in the lane signal transmitted through the lane for which notification is received from the notifying part.

11. A monitoring method, comprising:
receiving a plurality of lane signals transmitted through a plurality of lanes from a transmission device partitioning an OTU frame into the plurality of lane signals;
extracting, for each lane of the plurality of lanes, data included in an overhead of the OTU frame from a lane signal of the received plurality of lane signals; and
outputting, as information indicating a communication condition of the lane transmitting the lane signal from which the data is extracted, information relating to the extracted data.
